# EUROPÄISCHE PATENTANMELDUNG

(11) **EP 4 646 913 A1**
(43) Veröffentlichungstag der Anmeldung: **12.11.2025**
(21) Anmeldenummer: 25152042.5
(22) Anmeldetag: 15.01.2025
(51) Int. Cl.: A01D 41/127, A01D 43/08, A01F 29/22

(54) **FELDHÄCKSLER MIT INDUKTIVER ERFASSUNGSANORDNUNG UND OPTISCHER SENSOREINRICHTUNG**

(30) Priorität: 13.02.2024 DE 102024103907
(71) Anmelder: CLAAS Selbstfahrende Erntemaschinen GmbH, 33428 Harsewinkel (DE)
(72) Erfinder: Neitemeier, Dennis, Lippetal (DE); Brune, Markus, Harsewinkel (DE); Belau, Sven Carsten, Gütersloh (DE); Klein Helmkamp, Marwin, Osnabrück (DE); Dirksen, Matthis, Warendorf (DE); Bönig, Ingo, Gütersloh (DE); Titkemeier, Daniel, Osnabrück (DE)
(74) Vertreter: Budach, Steffen

(57) **Zusammenfassung**

Die vorliegende Erfindung betrifft eine als selbstfahrenden Feldhäcksler (2) ausgeführte landwirtschaftliche Arbeitsmaschine (1) zum Aufnehmen, Bearbeiten und Weiterleiten von Erntegut. Dieser Feldhäcksler (2) weist eine Häckseleinrichtung (6) zum Zerkleinern des aufgenommenen Ernteguts auf, wobei die Häckseleinrichtung (6) ein Trommelgehäuse (21, 22) umfasst, in dem eine Häckseltrommel (7) und mehrere Häckselmesser (8) angeordnet sind, wobei diese Häckselmesser (8) lösbar, insbesondere auswechselbar, an der Häckseltrommel (7) angeordnet sind. Ferner umfasst der Feldhäcksler (2) eine induktive Erfassungsanordnung (25) zur Zustandserfassung der Häckseleinrichtung (6) und eine am Auswurfkrümmer (15) angeordnete Sensoreinrichtung (51) zur optischen Aufnahme des gehäckselten Ernteguts.

Die vorliegende Erfindung beruht auf dem allgemeinen Gedanken, dass in Abhängigkeit der sensorisch ermittelten Häckselqualität des Erntegutstroms und dem sensorisch erfassten Verschleißzustand der Häckselmesser (8) ermittelt wird, ob eine Schleifung der Häckselmesser (8) mittels einer Messerschleifeinrichtung (17) erforderlich ist.

## Beschreibung

Die vorliegende Erfindung betrifft eine als selbstfahrender Feldhäcksler ausgeführte landwirtschaftliche Arbeitsmaschine zum Aufnehmen, Bearbeiten und Weiterleiten von Erntegut. Dieser Feldhäcksler weist eine Häckseleinrichtung zum Zerkleinern des aufgenommenen Ernteguts auf, wobei die Häckseleinrichtung ein Trommelgehäuse umfasst, in dem eine Häckseltrommel und mehrere Häckselmesser angeordnet sind, wobei diese Häckselmesser lösbar, insbesondere auswechselbar, an der Häckseltrommel angeordnet sind. Ferner umfasst der Feldhäcksler eine induktive Erfassungsanordnung zur Zustandserfassung der Häckseleinrichtung und eine am Auswurfkrümmer angeordnete Sensoreinrichtung zur optischen Aufnahme des gehäckselten Ernteguts.

Die DE 10 2013 107 169 A1 betrifft eine landwirtschaftliche Erntemaschine mit einer optischen Sensoreinrichtung zur zyklischen Aufnahme von Bildserien eines durchlaufenden Haupterntegutstroms und mit einer Auswerteeinrichtung zur Ermittlung eines Bruchkornanteils und/oder eines Nichtkornanteils des Haupterntegutstroms basierend auf der aufgenommenen Bildserie, wobei mittels einer Visualisierungseinrichtung eine Anzeige des aktuellen Bruchkornanteils und/oder des Nichtkornanteils erfolgt.

Aus der DE 10 2018 106 915 A1 ist ein mit einem Fahrerassistenzsystem ausgestatteter Feldhäcksler bekannt, dessen Arbeitsorgane als sogenannte Einstellautomaten strukturiert sind, die mittels des Fahrerassistenzsystems in der Weise ansteuerbar sind, sodass die Arbeitsparameter des Feldhäckslers optimiert werden können, ohne dass der Bediener des Feldhäckslers in diesen Prozess involviert sein muss. Dies hat insbesondere den Effekt, dass der Bediener nicht mehr selbst eine Überwachung der Arbeitsqualität des Feldhäckslers übernehmen muss.

Weiter ist aus der DE 10 2017 103 537 eine Sensoranordnung bekannt, die mittels induktiver Sensoren die umlaufenden Messer einer Häckseltrommelanordnung detektiert und aus dem ermittelten magnetischen Fluss einen Verschleißzustand der Häckselmesser ableitet, wobei sich der Verschleiß aus der jeweils induzierten Spannung ergibt.

Zwar ist der Verschleißzustand der Häckselmesser ein wichtiger Parameter, jedoch sollte die Ermittlung der Erforderlichkeit eines Nachschleifens der Häckselmesser nicht ausschließlich auf diesem Parameter basieren, da trotz des Vorhandenseins eines theoretisch passenden Häckselmesserzustandes aufgrund weiterer Einflussfaktoren ggf. eine nicht optimale Häckselung des Ernteguts erfolgen kann.

Der vorliegenden Erfindung liegt somit die Aufgabe zugrunde, eine verbesserte Ausführungsform des selbstfahrenden Feldhäckslers anzugeben, wobei neben der induktiven Erfassung des Verschleißzustandes der Häckselmesser weitere sensorbasierte Informationen verwendet werden, um die Erforderlichkeit eines Nachschleifens der Häckselmesser zu ermitteln.

Die vorliegende Erfindung beruht auf dem allgemeinen Gedanken, dass in Abhängigkeit einer sensorisch ermittelten Häckselqualität des Erntegutstroms und einem sensorisch erfassten Verschleißzustand der Häckselmesser ermittelt wird, ob eine Schleifung der Häckselmesser mittels einer Messerschleifeinrichtung erforderlich ist. Hierdurch wird gesichert, dass nur so oft und so intensiv wie erforderlich ein Nachschleifen der Häckselmesser erfolgt.

Der erfindungsgemäße selbstfahrende Feldhäcksler umfasst einen Erntevorsatz zur Aufnahme von Erntegut, eine Häckseleinrichtung zum Zerkleinern des aufgenommenen Ernteguts und einen Auswurfkrümmer zum Auswurf des gehäckselten Ernteguts. Die Häckseleinrichtung weist ein Trommelgehäuse auf, in dem eine Häckseltrommel und mehrere Häckselmesser angeordnet sind, wobei die Häckselmesser lösbar, insbesondere auswechselbar, mit der Häckseltrommel verbunden sind. Zusätzlich ist an dem Trommelgehäuse eine Messerschleifeinrichtung mit einem Schleifstein zur Schleifung der Häckselmesser ausgebildet. Die Messerschleifeinrichtung kann derart ausgebildet sein, dass deren Schleifstein horizontal über die Breite der Häckseltrommel bewegbar ist, sodass jedes an der Häckseltrommel positionierte Häckselmesser schleifbar ist.

Zusätzlich weist der selbstfahrende Feldhäcksler eine induktive Erfassungsanordnung zur Erfassung eines Verschleißzustandes der Häckselmesser auf, die am Trommelgehäuse der Häckseleinrichtung angeordnet ist. Weitere Details bezüglich dieser induktiven Erfassungsanordnung ergeben sich aus der DE 10 2019 112 968 A1, auf deren Offenbarungsgehalt hiermit vollumfänglich Bezug genommen wird.

Ferner weist der selbstfahrende Feldhäcksler eine optische Sensoreinrichtung zur Aufnahme von Bildserien des den Auswurfkrümmer durchlaufenden Ernteguts auf, wobei die Sensoreinrichtung am Auswurfkrümmer angeordnet ist. Weitere Details bezüglich dieser optischen Sensoreinrichtung ergeben sich aus der DE 10 2013 107 169 A1 und/oder DE 10 2018 106 915 A1, auf deren Offenbarungsgehalt hiermit vollumfänglich Bezug genommen wird.

Eine Einstellvorrichtung ist zur Einstellung des Feldhäckslers vorgesehen, wobei die Einstellvorrichtung kommunizierend mit der induktiven Erfassungsanordnung und der optischen Sensoreinrichtung verbunden ist, wobei die Einstellvorrichtung zur Ermittlung einer Häckselqualität des Erntegutstroms basierend auf einer Bildanalyse der mittels der optischen Sensoreinrichtung aufgenommenen Bildserie vorgesehen und eingerichtet ist. Zwecks einer Aktivierung oder Deaktivierung eines Messerschleifvorganges ist die Messerschleifeinrichtung kommunizierend mit der Einstellvorrichtung verbunden.

Die Einstellvorrichtung kann als Steuer- und/oder Regelvorrichtung ausgebildet sein, die eine Einstellung durch eine Steuerung und/oder Regelung des selbstfahrenden Feldhäckslers, insbesondere von Komponenten, insbesondere des Vorsatzgerätes und/oder der Arbeitsaggregate und/oder der induktiven Erfassungsanordnung und/oder der Messerschleifeinrichtung, des selbstfahrenden Feldhäckslers, bewirkt. Die Einstellvorrichtung kann eine Recheneinheit, insbesondere eine computerbasierte Recheneinheit, und einen Datenspeicher, insbesondere einen computerlesbaren Datenspeicher, aufweisen.

Unter einer kommunizierenden Verbindung kann zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Die kommunizierende Verbindung kann insbesondere kabellos und/oder drahtlos ausgebildet sein.

Die Einstellvorrichtung ist dazu vorgesehen und eingerichtet, insbesondere dazu ausgebildet und/oder programmiert, in Abhängigkeit der ermittelten Häckselqualität des Erntegutstroms und dem erfassten Verschleißzustand der Häckselmesser zu ermitteln, ob eine Schleifung der Häckselmesser mittels der Messerschleifeinrichtung erforderlich ist.

Somit wird gesichert, dass nur so oft und so intensiv wie erforderlich ein Nachschleifen der Häckselmesser erfolgt.

Bei einer vorteilhaften Weiterbildung der erfindungsgemäßen Lösung ist vorgesehen, dass die Einstellvorrichtung dazu eingerichtet ist, lediglich eine Schleifung der Häckselmesser mittels der Messerschleifeinrichtung in Abhängigkeit des erfassten Verschleißzustandes der Häckselmesser zu initiieren, falls die ermittelte Häckselqualität des Erntegutstroms einer datentechnisch hinterlegten Häckselqualität nicht entspricht. Die datentechnisch hinterlegte Häckselqualität kann einem Sollwert der Häckselqualität entsprechen.

Bei einer vorteilhaften Weiterbildung der erfindungsgemäßen Lösung ist vorgesehen, dass die Einstellvorrichtung dazu eingerichtet ist, eine Schleifung der Häckselmesser mittels der Messerschleifeinrichtung in Abhängigkeit des erfassten Verschleißzustandes der Häckselmesser zu unterbinden, falls die ermittelte Häckselqualität des Erntegutstroms einer datentechnisch hinterlegten Häckselqualität entspricht.

Bei einer vorteilhaften Weiterbildung der erfindungsgemäßen Lösung ist vorgesehen, dass die Einstellvorrichtung dazu eingerichtet ist, mittels der Bildanalyse Bestandteile des Erntegutstroms zu ermitteln.

Bei einer vorteilhaften Weiterbildung der erfindungsgemäßen Lösung ist vorgesehen, dass die Einstellvorrichtung dazu eingerichtet ist, die Ermittlung der Bestandteile des Erntegutstroms mittels einer bildbearbeitungstechnischen Segmentierung durchzuführen. Die Segmentierung kann eine semantische Segmentierung sein, bei der jedem Pixel und/oder Datenpunkt eine Klasse zugeordnet. Alternativ oder zusätzlich kann die Segmentierung das Bild in verschiedene Instanzen unterteilen, wobei jedem Pixel und/oder Datenpunkt einer Instanz ein individueller Wert zugewiesen wird. Hierdurch wird eine Unterteilung verschiedener Instanzen und/oder die zeitliche Verfolgbarkeit dieser Instanzen ermöglicht.

Bei einer vorteilhaften Weiterbildung der erfindungsgemäßen Lösung ist vorgesehen, dass die Einstellvorrichtung dazu eingerichtet ist, bei der Ermittlung der Bestandteile des Erntegutstroms eine Lokalisierung und/oder eine Klassifizierung der Bestandteile durchzuführen.

Bei einer vorteilhaften Weiterbildung der erfindungsgemäßen Lösung ist vorgesehen, dass die Einstellvorrichtung dazu eingerichtet ist, dass die ermittelten Bestandteile einzelne Bestandteile des Erntegutstroms und/oder alle Bestandteile des Erntegutstroms und/oder unterschiedliche Bestandteile des Erntegutstroms ausbilden.

Bei einer vorteilhaften Weiterbildung der erfindungsgemäßen Lösung ist vorgesehen, dass die Einstellvorrichtung dazu eingerichtet ist, mittels der Bildanalyse der Bildserie bezüglich eines jeden Bestandteils des Erntegutstroms ein passendes Polygon zu erzeugen, welches die Grundlage für die Ermittlung der Häcksellänge des jeweiligen Bestandteils ausbildet.

Bei einer vorteilhaften Weiterbildung der erfindungsgemäßen Lösung ist vorgesehen, dass die Einstellvorrichtung dazu eingerichtet ist, dass die ermittelte Häckselqualität eine Häcksellänge eines Bestandteils des Erntegutstroms umfasst, die mit einer datentechnisch hinterlegten Häcksellänge verglichen wird, um zu ermitteln, ob die Häckselqualität des Erntegutstroms einer datentechnisch hinterlegten Häckselqualität entspricht oder nicht entspricht. Die datentechnisch hinterlegte Häcksellänge kann einem Sollwert der Häcksellänge entsprechen.

Bei einer vorteilhaften Weiterbildung der erfindungsgemäßen Lösung ist vorgesehen, dass die Einstellvorrichtung dazu eingerichtet ist, dass für unterschiedliche Bestandteile des Erntegutstroms unterschiedliche Häcksellängen datentechnisch hinterlegt sind.

Bei einer vorteilhaften Weiterbildung der erfindungsgemäßen Lösung ist vorgesehen, dass die Einstellvorrichtung dazu eingerichtet ist, festzustellen, dass eine ermittelte Häckselqualität des Erntegutstroms einem datentechnisch hinterlegten Häckselqualität nicht entspricht, falls eine oder mehrere Häcksellängen des Erntegutstroms eine eingestellte Häcksellänge überschreiten.

Bei einer vorteilhaften Weiterbildung der erfindungsgemäßen Lösung ist vorgesehen, dass die Einstellvorrichtung dazu eingerichtet ist, lediglich eine Schleifung der Häckselmesser mittels der Messerschleifeinrichtung in Abhängigkeit des erfassten Verschleißzustandes der Häckselmesser zu initiieren, falls die ermittelte Häckselqualität des Erntegutstroms einer datentechnisch hinterlegten Häckselqualität nicht entspricht.

Bei einer vorteilhaften Weiterbildung der erfindungsgemäßen Lösung ist vorgesehen, dass die Einstellvorrichtung dazu eingerichtet ist, nach einer mittels der Messerschleifeinrichtung vorgenommenen erforderlichen Schleifung der Häckselmesser basierend auf der ermittelten Häckselqualität des Erntegutstroms zu ermitteln, ob die vorgenommene Schleifung der Häckselmesser mittels der Messerschleifeinrichtung bezüglich der Häckselqualität des Erntegutstroms ausreichend war.

Bei einer vorteilhaften Weiterbildung der erfindungsgemäßen Lösung ist vorgesehen, dass die Bildanalyse mittels einem neuronalen Netzwerk, insbesondere einem Convolutional Neutral Network, in Form eines eingelernten Modells zur Verarbeitung von Bilddaten erfolgt.

Bei einer vorteilhaften Weiterbildung der erfindungsgemäßen Lösung ist vorgesehen, dass der selbstfahrende Feldhäcksler innerhalb einer Fahrerkabine eine Anzeigeeinheit zur Visualisierung der ermittelten Häckselqualität des Erntegutstroms aufweist, sodass ein Fahrer des selbstfahrenden Feldhäckslers eine Schleifung der Häckselmesser mittels der Messerschleifeinrichtung initiieren kann, falls die ermittelte Häckselqualität des Erntegutstroms einer nicht erwünschten Häckselqualität entspricht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Darstellung eines selbstfahrenden Feldhäckslers in Seitenansicht, und
- Fig. 2: eine Detailansicht des Feldhäckslers nach Figur 1 mit einer induktiven Sensoranordnung.

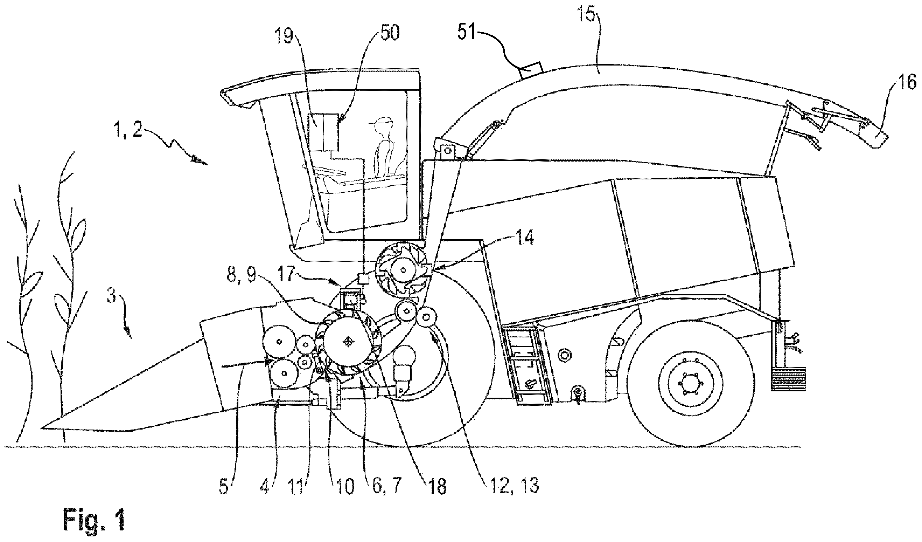

Die Fig. 1 zeigt schematisch eine als selbstfahrender Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt.

Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangseitig eine an sich bekannte und daher hier nicht im Detail beschriebene Messerschleifeinrichtung 17 zugeordnet, deren Schleifstein 18 horizontal über die Breite der Häckseltrommel 7 bewegbar ist, sodass jedes am Umfang der Häckseltrommel 7 positionierte Häckselmesser 8 schleifbar ist. Zwecks Aktivierung oder Deaktivierung des Messerschleifvorganges ist die Messerschleifeinrichtung 17 in signalübertragender Weise mit einer Einstellvorrichtung 19 verbunden.

Ferner weist der selbstfahrende Feldhäcksler 2 eine optische Sensoreinrichtung 51 zur Aufnahme von Bildserien des den Auswurfkrümmer 15 durchlaufenden Ernteguts auf. Weitere Details bezüglich dieser optischen Sensoreinrichtung 51 ergeben sich aus der DE 10 2013 107 169 A1 und/oder DE 10 2018 106 915 A1, auf deren Offenbarungsgehalt hiermit vollumfänglich Bezug genommen wird.

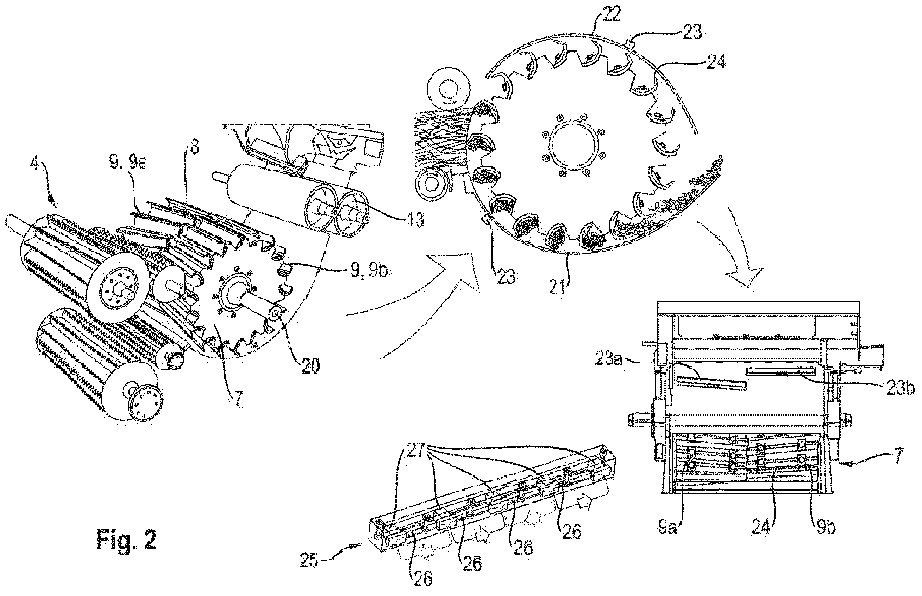

Gemäß Fig. 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird unterseitig von einem vorzugsweise aus Edelstahl bestehenden Trommelboden 21 ummantelt. Oberseitig wird die Häckseltrommel 7 von einer vorzugsweise ebenfalls aus Edelstahl bestehenden Trommelrückwand 22 umschlossen. Die Trommelrückwand 22 und der Trommelboden 21 bilden das Trommelgehäuse aus.

Eine Sensoranordnung 23 kann gemäß dem in der Fig. 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest zwei Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein.

Im dargestellten Ausführungsbeispiel der Fig. 2 sind die Sensoranordnungen 23a, 23b als induktive Erfassungsanordnungen 25 ausgeführt, wobei jede Sensoranordnung 23 ein oder mehrere magnetische Erregeranordnungen 26 sowie jeweils eine mit diesen zusammenwirkende Polanordnung 27 umfasst. Diese induktive Erfassungsanordnung 25 ist zur Erfassung eines Verschleißzustandes der Häckselmesser 8 vorgesehen und ausgebildet. Weitere Details bezüglich der induktiven Erfassungsanordnungen 25 ergeben sich aus der DE 10 2019 112 968 A1, auf deren Offenbarungsgehalt hiermit vollumfänglich Bezug genommen wird.

Der Feldhäcksler 2 weist eine Einstellvorrichtung 19 auf, die kommunizierend mit der induktiven Erfassungsanordnung 25 und der optischen Sensoreinrichtung 51 verbunden ist, wobei die Einstellvorrichtung 19 zur Ermittlung einer Häckselqualität des Erntegutstroms basierend auf einer Bildanalyse der mittels der optischen Sensoreinrichtung 51 aufgenommenen Bildserie vorgesehen und eingerichtet ist.

Erfindungsgemäß ist die Einstellvorrichtung 19 dazu vorgesehen und eingerichtet, in Abhängigkeit der ermittelten Häckselqualität des Erntegutstroms und dem erfassten Verschleißzustand der Häckselmesser 8 zu ermitteln, ob eine Schleifung der Häckselmesser 8 mittels der Messerschleifeinrichtung 17 erforderlich ist. Hierbei kann es vorgesehen sein, dass eine Schleifung der Häckselmesser 8 mittels der Messerschleifeinrichtung 17 in Abhängigkeit des erfassten Verschleißzustandes der Häckselmesser 8 lediglich initiiert wird, falls die ermittelte Häckselqualität des Erntegutstroms einer datentechnisch hinterlegten Häckselqualität, also einem Sollwert der Häckselqualität, nicht entspricht.

Der selbstfahrende Feldhäcksler 2 kann innerhalb einer Fahrerkabine eine Anzeigeeinheit 50 zur Visualisierung der ermittelten Häckselqualität des Erntegutstroms für einen Fahrer des selbstfahrenden Feldhäckslers 2 aufweisen. Der Fahrer und/oder die Einstellvorrichtung 19 kann eine Schleifung der Häckselmesser 8 mittels der Messerschleifeinrichtung 17 initiieren, falls die ermittelte Häckselqualität des Erntegutstroms einer nicht erwünschten Häckselqualität entspricht. Alternativ oder zusätzlich kann die Einstellvorrichtung 19 dazu vorgesehen und eingerichtet sein, eine Schleifung der Häckselmesser 8 mittels der Messerschleifeinrichtung 17 in Abhängigkeit des erfassten Verschleißzustandes der Häckselmesser 8 zu unterbinden, falls die ermittelte Häckselqualität des Erntegutstroms einer datentechnisch hinterlegten Häckselqualität entspricht.

Die Einstellvorrichtung 19 kann dazu vorgesehen und eingerichtet sein, mittels der Bildanalyse Bestandteile des Erntegutstroms zu ermitteln. Die Bildanalyse kann mittels einem neuronalen Netzwerk, insbesondere einem Convolutional Neutral Network, in Form eines eingelernten Modells zur Verarbeitung von Bilddaten erfolgen. Die Ermittlung der Bestandteile des Erntegutstroms kann mittels einer bildbearbeitungstechnischen Segmentierung erfolgen. Zusätzlich oder alternativ kann bei der Ermittlung der Bestandteile des Erntegutstroms eine Lokalisierung und/oder eine Klassifizierung der Bestandteile des Ernteguts durchgeführt werden. Diese ermittelten Bestandteile können einzelne Bestandteile des Erntegutstroms und/oder alle Bestandteile des Erntegutstroms und/oder unterschiedliche Bestandteile des Erntegutstroms umfassen.

Die Einstellvorrichtung 19 kann dazu vorgesehen und eingerichtet sein, mittels der Bildanalyse der Bildserie bezüglich eines jeden Bestandteils des Erntegutstroms ein passendes Polygon zu erzeugen, welches die Grundlage für die Ermittlung der Häcksellänge des jeweiligen Bestandteils ausbildet. Somit kann die ermittelte Häckselqualität eine Häcksellänge eines Bestandteils des Erntegutstroms umfassen, die mit einer datentechnisch hinterlegten Häcksellänge verglichen wird, um zu ermitteln, ob die Häckselqualität des Erntegutstroms einer datentechnisch hinterlegten Häckselqualität entspricht oder nicht entspricht.

In der Einstellvorrichtung 19 sind für unterschiedliche Bestandteile des Erntegutstroms unterschiedliche optimale Häcksellängen datentechnisch hinterlegt. Die Einstellvorrichtung 19 ist dazu ausgebildet, festzustellen, dass eine ermittelte Häckselqualität des Erntegutstroms einem datentechnisch hinterlegten Häckselqualität nicht entspricht, falls eine oder mehrere Häcksellängen des Erntegutstroms eine eingestellte Häcksellänge überschreiten. Die Einstellvorrichtung 19 kann dazu vorgesehen und eingerichtet sein, lediglich eine Schleifung der Häckselmesser 8 mittels der Messerschleifeinrichtung 17 in Abhängigkeit des erfassten Verschleißzustandes der Häckselmesser 8 zu initiieren, falls die ermittelte Häckselqualität des Erntegutstroms einer datentechnisch hinterlegten Häckselqualität nicht entspricht.

Ferner ist die Einstellvorrichtung 19 dazu eingerichtet, nach einer mittels der Messerschleifeinrichtung 17 vorgenommenen erforderlichen Schleifung der Häckselmesser 8 basierend auf der ermittelten Häckselqualität des Erntegutstroms zu ermitteln, ob die vorgenommene Schleifung der Häckselmesser 8 mittels der Messerschleifeinrichtung 17 bezüglich der Häckselqualität des Erntegutstroms ausreichend war. Falls die Häckselqualität des Erntegutstroms aufgrund der Schleifung der Häckselmesser 8 nicht ausreichend gewesen sein sollte, kann die Einstellvorrichtung 19 eine weitere Schleifung der Häckselmesser 8 initiieren.

### Bezugszeichenliste

1 landwirtschaftliche Arbeitsmaschine
2 Selbstfahrender Feldhäcksler
3 Erntevorsatz
4 Einzugs- und Vorpresswalzen
5 Erntegutstrom
6 Häckseleinrichtung
7 Häckseltrommel
8 Häckselmesser
9 Häckselmesseranordnung a... b
10 Einzugsbereich
11 Gegenschneide
12 Cracker
13 Nachzerkleinerungseinrichtung
14 Nachbeschleunigungseinrichtung
15 Auswurfkrümmer
16 Auswurfkrümmerklappe
17 Messerschleifeinrichtung
18 Schleifstein
19 Einstellvorrichtung
20 Drehachse der Häckseltrommel
21 Trommelboden
22 Trommelrückwand
23 Sensoranordnung a...b
24 Schneidkante
25 induktive Erfassungsanordnung
26 magnetische Erregeranordnung
27 Polanordnung
50 Anzeigeeinheit
51 optische Sensoreinrichtung

## Patentansprüche

1. Selbstfahrender Feldhäcksler (2)
- mit einem Erntevorsatz (3) zur Aufnahme von Erntegut,
- mit einer Häckseleinrichtung (6) zum Zerkleinern des aufgenommenen Ernteguts, wobei die Häckseleinrichtung (6) ein Trommelgehäuse (21, 22) aufweist, in dem eine mehrere Häckselmesser (8) aufweisende Häckseltrommel (7) angeordnet ist, wobei an dem Trommelgehäuse (21, 22) eine Messerschleifeinrichtung (17) mit einem Schleifstein (18) zur Schleifung der Häckselmesser (8) ausgebildet ist,
- mit einem Auswurfkrümmer (15) zum Auswurf des gehäckselten Ernteguts,
- mit einer induktiven Erfassungsanordnung (25) zur Erfassung eines Verschleißzustandes der Häckselmesser (8), wobei die Erfassungsanordnung (25) am Trommelgehäuse (21, 22) der Häckseleinrichtung (6) angeordnet ist,
- mit einer optischen Sensoreinrichtung (51) zur Aufnahme von Bildserien des den Auswurfkrümmer (15) durchlaufenden Ernteguts, wobei die Sensoreinrichtung (51) am Auswurfkrümmer (15) angeordnet ist,
- mit einer Einstellvorrichtung (19) zur Einstellung des Feldhäckslers (2), wobei die Einstellvorrichtung (19) kommunizierend mit der induktiven Erfassungsanordnung (25) und der optischen Sensoreinrichtung (51) verbunden ist, wobei die Einstellvorrichtung (19) zur Ermittlung einer Häckselqualität des Erntegutstroms basierend auf einer Bildanalyse der mittels der optischen Sensoreinrichtung (51) aufgenommenen Bildserie vorgesehen und eingerichtet ist,
**dadurch gekennzeichnet,**
- **dass** die Einstellvorrichtung (19) dazu vorgesehen und eingerichtet ist, in Abhängigkeit der ermittelten Häckselqualität des Erntegutstroms und dem erfassten Verschleißzustand der Häckselmesser (8) zu ermitteln, ob eine Schleifung der Häckselmesser (8) mittels der Messerschleifeinrichtung (17) erforderlich ist.

2. Selbstfahrender Feldhäcksler (2) nach Anspruch 1,
**dadurch gekennzeichnet,**
**dass** die Einstellvorrichtung (19) dazu vorgesehen und eingerichtet ist, lediglich eine Schleifung der Häckselmesser (8) mittels der Messerschleifeinrichtung (17) in Abhängigkeit des erfassten Verschleißzustandes der Häckselmesser (8) zu initiieren, falls die ermittelte Häckselqualität des Erntegutstroms einer datentechnisch hinterlegten Häckselqualität nicht entspricht.

3. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, eine Schleifung der Häckselmesser (8) mittels der Messerschleifeinrichtung (17) in Abhängigkeit des erfassten Verschleißzustandes der Häckselmesser (8) zu unterbinden, falls die ermittelte Häckselqualität des Erntegutstroms einer datentechnisch hinterlegten Häckselqualität entspricht.

4. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, mittels der Bildanalyse Bestandteile des Erntegutstroms zu ermitteln.

5. Selbstfahrender Feldhäcksler (2) nach Anspruch 4,
**dadurch gekennzeichnet,**
**dass** die Einstellvorrichtung (19) dazu vorgesehen und eingerichtet ist, die Ermittlung der Bestandteile des Erntegutstroms mittels einer bildbearbeitungstechnischen Segmentierung durchzuführen.

6. Selbstfahrender Feldhäcksler (2) nach Anspruch 4 oder 5,
**dadurch gekennzeichnet,**
**dass** die Einstellvorrichtung (19) dazu vorgesehen und eingerichtet ist, bei der Ermittlung der Bestandteile des Erntegutstroms eine Lokalisierung und/oder eine Klassifizierung der Bestandteile durchzuführen.

7. Selbstfahrender Feldhäcksler (2) nach einem der Ansprüche 4 bis 6,
**dadurch gekennzeichnet,**
**dass** die ermittelten Bestandteile einzelne Bestandteile des Erntegutstroms und/oder alle Bestandteile des Erntegutstroms und/oder unterschiedliche Bestandteile des Erntegutstroms ausbilden.

8. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, mittels der Bildanalyse der Bildserie bezüglich eines jeden Bestandteils des Erntegutstroms ein passendes Polygon zu erzeugen, welches die Grundlage für die Ermittlung der Häcksellänge des jeweiligen Bestandteils ausbildet.

9. Selbstfahrender Feldhäcksler (2) nach einem der vorhergehenden Ansprüche,
**dadurch gekennzeichnet,**
**dass** die ermittelte Häckselqualität eine Häcksellänge eines Bestandteils des Erntegutstroms umfasst, die mit einer datentechnisch hinterlegten Häcksellänge verglichen wird, um zu ermitteln, ob die Häckselqualität des Erntegutstroms einer datentechnisch hinterlegten Häckselqualität entspricht oder nicht entspricht.

10. Selbstfahrender Feldhäcksler (2) nach einem der vorhergehenden Ansprüche,
**dadurch gekennzeichnet,**
**dass** in der Einstellvorrichtung (19) für unterschiedliche Bestandteile des Erntegutstroms unterschiedliche Häcksellängen datentechnisch hinterlegt sind.

11. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, festzustellen, dass eine ermittelte Häckselqualität des Erntegutstroms einem datentechnisch hinterlegten Häckselqualität nicht entspricht, falls eine oder mehrere Häcksellängen des Erntegutstroms eine eingestellte Häcksellänge überschreiten.

12. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, lediglich eine Schleifung der Häckselmesser (8) mittels der Messerschleifeinrichtung (17) in Abhängigkeit des erfassten Verschleißzustandes der Häckselmesser (8) zu initiieren, falls die ermittelte Häckselqualität des Erntegutstroms einer datentechnisch hinterlegten Häckselqualität nicht entspricht.

13. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, nach einer mittels der Messerschleifeinrichtung (17) vorgenommenen erforderlichen Schleifung der Häckselmesser (8) basierend auf der ermittelten Häckselqualität des Erntegutstroms zu ermitteln, ob die vorgenommene Schleifung der Häckselmesser (8) mittels der Messerschleifeinrichtung (17) bezüglich der Häckselqualität des Erntegutstroms ausreichend war.

14. Selbstfahrender Feldhäcksler (2) nach einem der vorhergehenden Ansprüche,
**dadurch gekennzeichnet,**
**dass** die Bildanalyse mittels einem neuronalen Netzwerk, insbesondere einem Convolutional Neutral Network, in Form eines eingelernten Modells zur Verarbeitung von Bilddaten erfolgt.

15. Selbstfahrender Feldhäcksler (2) nach einem der vorhergehenden Ansprüche,
**dadurch gekennzeichnet,**
**dass** der selbstfahrende Feldhäcksler (2) innerhalb einer Fahrerkabine eine Anzeigeeinheit (50) zur Visualisierung der ermittelten Häckselqualität des Erntegutstroms aufweist, sodass ein Fahrer des selbstfahrenden Feldhäckslers (2) eine Schleifung der Häckselmesser (8) mittels der Messerschleifeinrichtung (17) initiieren kann, falls die ermittelte Häckselqualität des Erntegutstroms einer nicht erwünschten Häckselqualität entspricht.
